# EUROPEAN PATENT SPECIFICATION

(11) **EP 1 292 192 B1**
(45) Date of publication and mention of the grant of the patent: **28.09.2005**
(21) Application number: 01943968.6
(22) Date of filing: 19.06.2001
(51) Int. Cl.: A22C 15/00

(54) **METHOD AND APPARATUS FOR TRANSPORTING SAUSAGE TO A TREATMENT ROOM**
VERFAHREN UND APPARAT ZUM TRANSPORTIEREN VON WÜRSTEN IN EINEM BEHANDLUNGSRAUM
PROCEDE ET APPAREIL PERMETTANT DE TRANSPORTER UNE SAUCISSE DANS UNE SALLE DE TRAITEMENT

(30) Priority: 19.06.2000 NL 1015470
(43) Date of publication of application: 19.03.2003
(73) Proprietor: Van de Wal Metaalbewerking B.V., 3771 MA Barneveld (NL)
(72) Inventor: VAN DE WAL, Hendrik, NL-3771 AB Barneveld (NL)
(74) Representative: Land, Addick Adrianus Gosling
(86) International application number: PCT/NL2001/000457
(87) International publication number: WO 2001/097622

(56) References cited:
- EP-A- 0 048 507
- EP-A- 0 093 037
- EP-A- 0 461 860
- EP-A- 0 941 664
- WO-A-92/03929
- DE-C- 3 930 876

## Description

In large parts of Europe as well as outside Europe, so-called smoked sausages are produced and consumed in large numbers. The production thereof is usually highly automated. Examples hereof are described in the international patent application PCT/NL91/00154, American Patent 5.100.364 and European patent applications EP-A-O 048 507 and EP-A-O 498 127.

Such a production for instance takes place at a speed in the order of magnitude of 50 sausages per minute. The sausages are then suspended in a smoke chamber for 24 hours for instance in numbers of 100 sticks, each with 15 to 17 sausages on a piece of string.

In current practice the suspending of sausages from a stick in a smoke chamber takes place manually. Proposals to also automate the suspension of sausages on the string have not yet resulted in a practical solution.

The present invention provides a method for transporting sausages provided with a suspension member into a treatment chamber, wherein the sausages are placed in a cassette in a predetermined position, and wherein a predetermined number of cassettes with the sausages therein are disposed adjacently of each other in the predetermined position, so that a stick or tube can be inserted through the cassettes in order to allow the sausages to be transported to the treatment chamber and to remain there adjacently of each other. The present invention further provides a device for transporting one or more sausages provided with a suspension member into a treatment chamber, comprising a cassette for receiving a sausage, and one or more conveyors for transporting filled respectively emptied cassettes from and to a supply of the sausages.

An inexpensive and elegant embodiment results if use is made of a feed conveyor for feeding cassettes filled with sausage to a part of the discharge cassettes where a stick or tube can be placed through the opening in cassettes and sausages can be lifted from the cassettes.

In a further preferred embodiment the device is provided with an intermediate station for positioning sausages as well as possible relative to the holder.

Further advantages, features and details of the present invention will be elucidated on the basis of the following description of a preferred embodiment thereof, with reference to the annexed figures, in which:
- fig. 1 shows a schematic top view in perspective of a first preferred embodiment of a device according to the present invention for performing a preferred embodiment of a method according to the present invention;
- fig. 2A and fig. 2B show a perspective view of detail II of fig. 1;
- fig. 3 shows a partly schematic view in perspective of a further preferred embodiment and device according to the present invention; and
- fig. 4 shows a perspective view of the embodiment of fig. 3;
- fig. 5 is a partly schematic view in perspective of a further embodiment and device according to the present invention;
- fig. 6 is a perspective view of a detail of the embodiment of fig. 5; and
- fig. 7 is a perspective view of a further detail of the embodiment of fig. 5.

An in many cases mechanically produced (smoked) sausage S is carried into a cassette 2 via a narrowing slide chute 1, whereafter the cassette 2 is displaced laterally by pusher member 3 to a conveyor device 4, which is disposed adjacently of a conveyor device 5 where cassettes 2 for filling are supplied. Cassettes 2 filled with sausages S are transported in the direction of arrow A, for instance using second pusher member 6 and belts 7 of conveyor 4. After a predetermined number of, for instance about 20, cassettes filled with sausages have accumulated close to an end of conveyor 4, this predetermined number is pushed using a third pusher member 8 to a conveyor part 9, where a stick or rod 10 is inserted through the opening in the cassettes and moved upward in order to lift the smoked sausages simultaneously out of their associated cassettes in automatic manner and displace them to a smoke chamber. Using conveyor 5 the emptied cassettes are then subsequently carried to a position close to pusher member 3, where the above described cycle can be repeated.

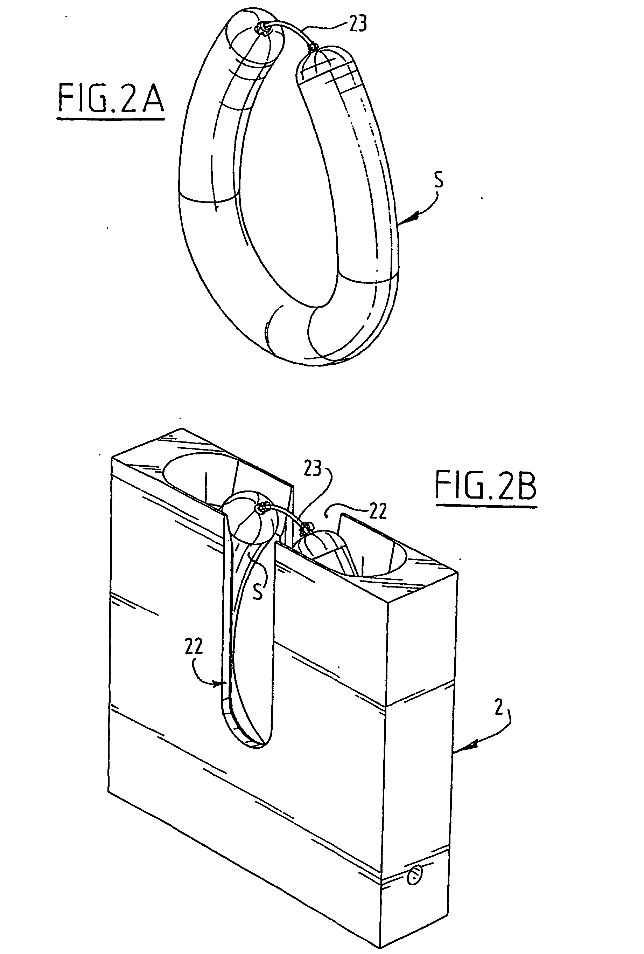

As can be seen in figures 2A and 2B, cassette 2 is formed and provided on both sides with slotted recesses 22 such that a stick or tube 10 can easily be inserted therein beneath a piece of string or cord 23. Even if sausage S has come to lie slightly askew in the cassette, some movement of the stick back and forth relative to the cassettes will enable the sausage to be lifted easily from the cassette.

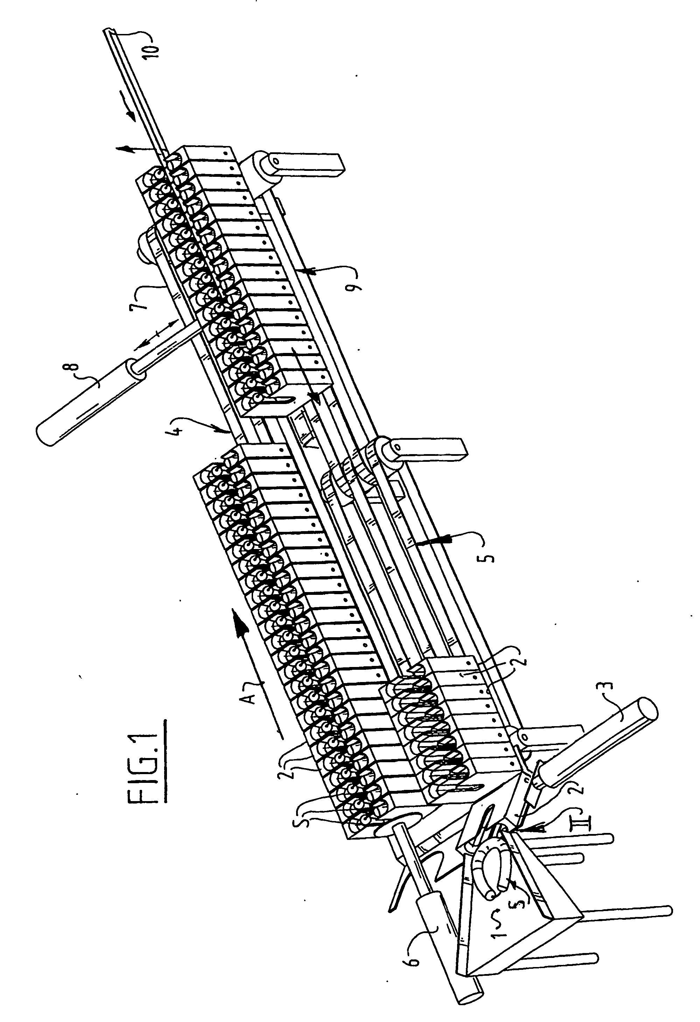

In the preferred embodiment drawn in fig. 1 the cassette directed toward the slide chute is clamped and moved sideways by a pusher member. As soon as the cassette is filled with a sausage, it is placed by a second pusher member 6 on a conveyor 4, which can for instance run continuously. In a manner not shown, the predetermined number of cassettes can be counted using a counting means (not shown), and as soon as the number has been reached, be transferred by a pusher member 8 to a part 9 which can be driven independently of the other part of conveyor belt 5.

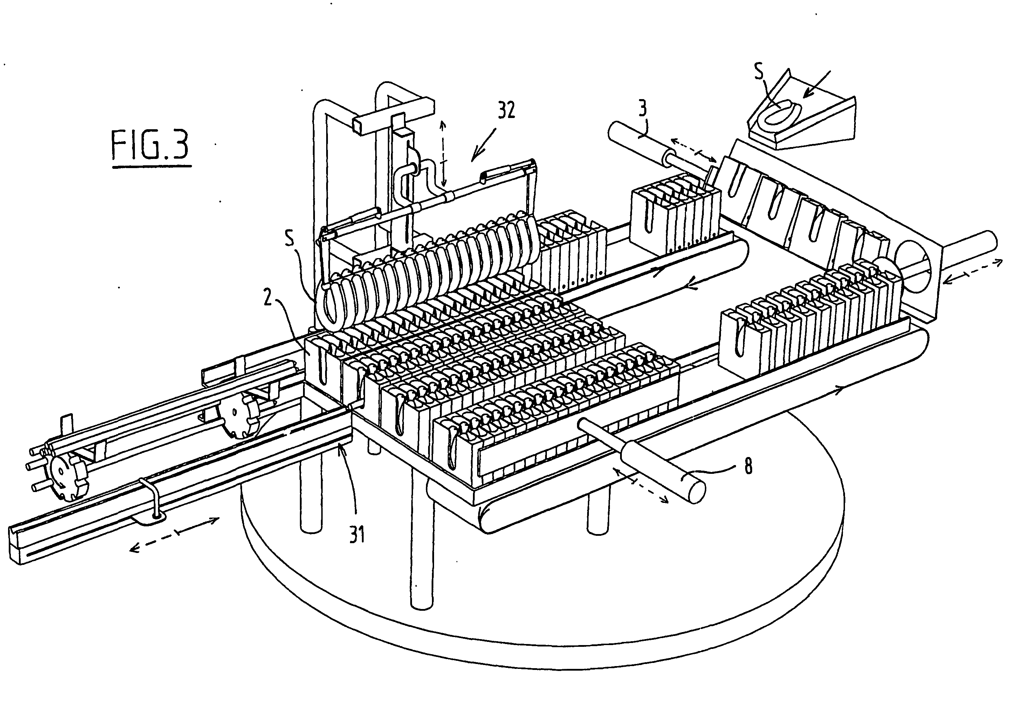

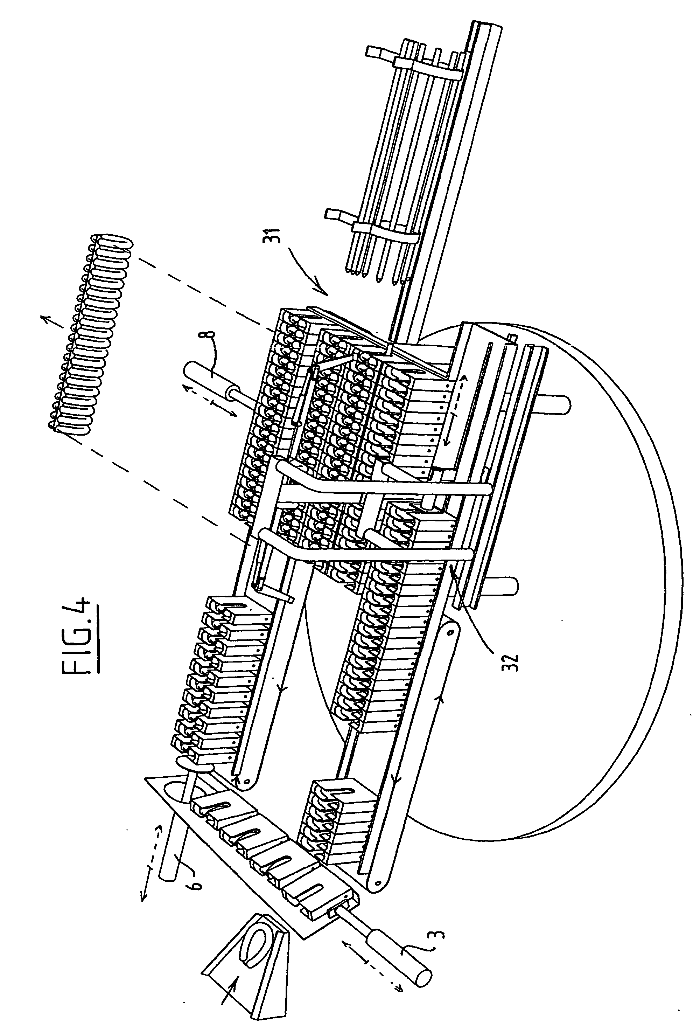

In the further developed preferred embodiment according to fig. 3 and 4, the diverse similar components are provided with the same reference numerals as said preferred embodiment according to fig. 1 and 2. In a stick supply station 31 a stick is inserted through the recesses in the cassettes, and the sausages are subsequently lifted out of the cassettes and shaken by lifting device 32 in order to ensure a correct positioning of the sausages.

In a further preferred embodiment (not shown) an additional stick supply station can be placed preceding the stick supply station 31 and between the conveyor with filled cassettes and this stick supply station, wherein diabolo-shaped protrusions are arranged on the stick at each position of a cassette in order to lift the sausages slightly out of the cassettes and to cause the sausages to hang on the strings by rotating the stick with the diabolos thereon. Thus is ensured that the sausages come to lie as straight as possible in the cassettes. For coarse sausages the diabolos can be provided with recesses to prevent friction occurring between sausage and stick when this latter is rotated. The sticks from the subsequent stick supply station can also be made rotatable for the same purpose.

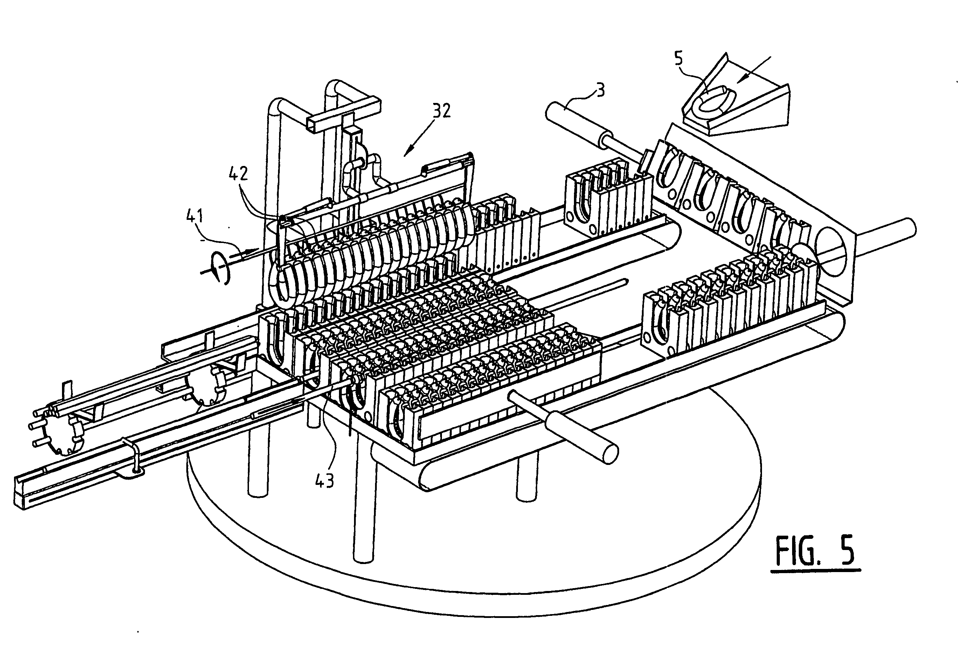

Figure 5 shows a preferred embodiment which corresponds by and large with the preferred embodiment of figure 3, wherein the reference numerals of similar components are the same. The diabolos already mentioned above are arranged on shaft 43. A shaft 41 provided with pins 42, together forming a so-called comb, is further provided on lifting device 32 for positioning the sausages at regular distances.

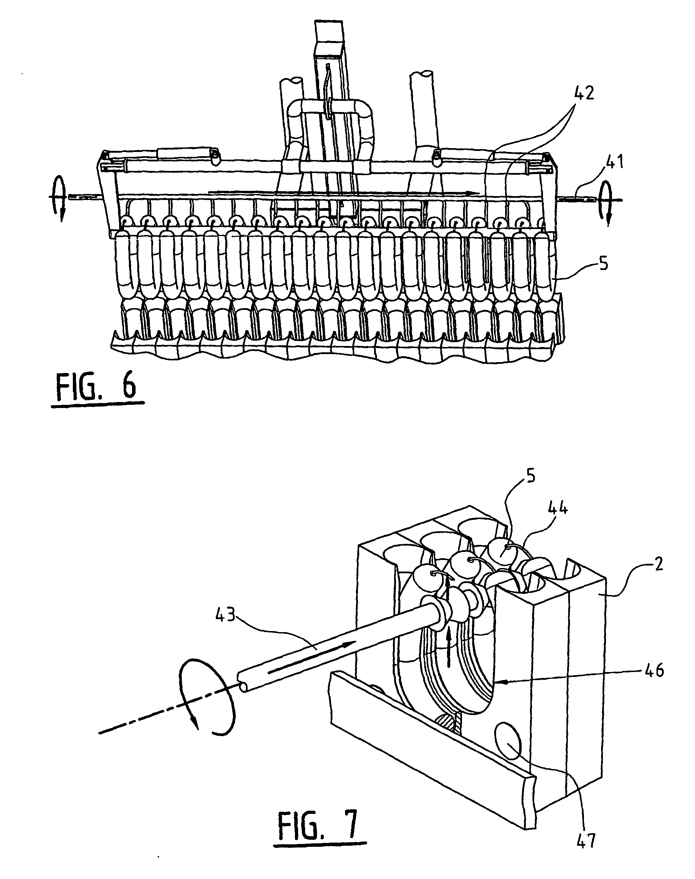

Lifting device 32 is shown in detail in figure 6. This shows the shaft 41 with pins 42. The sausages which have been lifted out of holders 2 by means of shaft 41 are not necessarily hanging positioned precisely at the same distance relative to each other. In order to achieve such a correct positioning, shaft 41 is rotated according to the arrow in a manner such that teeth 42 are placed between strings 44 of the sausages. Shaft 41 is then moved so far that each string is at least touched by a tooth, whereby all the strings are positioned at equal distances along shaft 41 through being pushed into place by teeth 42. The sausages are hereby suspended in very regular manner from shaft 41. It is also conceivable that, instead of being rotated, shaft 41 is displaced perpendicularly of its central axis in order to place the teeth 42 between the strings.

Figure 7 shows a further preferred embodiment of shaft 43 with the diabolos. In this figure the holders 2 are situated at a position in the device of figure 5 such that shaft 43 with diabolos 49 can be inserted through the holder and the sausages in a manner such that the diabolos can engage in the respective sausages. One purpose hereof is that, since the sausages are placed at random in the holders and it is essential that strings 44 are situated at the top, the sausages can be turned using the diabolos. If after placing of the sausage in the holder, the string is situated on the underside of the holder, the sausage must be turned. For this purpose the shaft 43 is inserted through a predetermined number of, for instance 20, holders and sausages and then lifted upward. If shaft 43 with diabolos 49 now begins to rotate, the sausage will co-rotate due to friction forces between the diabolo and the sausage until the string reaches the diabolo. At that moment the very much smaller friction force between the string and the diabolo, together with the force of gravity on the sausage, will bring to an end the rotation of the sausage, and the sausage will remain suspended over shaft 43 in the correct position. Shaft 43 is moved slightly downward and moved out of the array of holders. In this embodiment the openings of the holders take a slightly round form whereby opening 46 cannot form an obstruction to the moving in and out of shaft 43 with the diabolos.

It is recommended to embody a number of, for instance 20, holders integrally. This is possible according to the above described embodiments by means of for instance magnets 47 for snapping separate holders together. It is however also recommended to use large holders with 20 compartments, which have the same function as 20 separate holders snapped together.

It will be apparent that many variations on the above described preferred embodiment can be envisaged; the rights sought are defined by the scope of the following claims.

## Claims

1. Method for transporting one or more sausages provided with a suspension member into a treatment chamber, wherein the sausages are placed in a cassette in a predetermined position, and wherein a predetermined number of cassettes with the sausages therein are disposed adjacently of each other in the predetermined position, so that a stick or tube can be inserted through the cassettes in order to allow the sausages to be transported to the treatment chamber and to remain there adjacently of each other.

2. Method as claimed in claim 1, wherein the sausages are moved into a cassette via a slide chute.

3. Method as claimed in claim 2, wherein a filled cassette is carried to a first conveyor belt where the filled cassettes are disposed adjacently of each other up to the predetermined number.

4. Method as claimed in claim 1, 2 or 3, wherein the predetermined number of cassettes is carried to a second conveyor belt, whereafter the stick or tube is placed through the cassettes and the empty conveyor belt is transported to the slide chute.

5. Device for transporting one or more sausages provided with a suspension member into a treatment chamber, comprising a cassette for receiving a sausage, and one or more conveyors for transporting filled respectively emptied cassettes from and to a supply of the sausages.

6. Device as claimed in claim 5, comprising a discharge conveyor for discharging the cassettes filled with sausage.

7. Device as claimed in claim 5 or 6, comprising a feed conveyor for feeding emptied cassettes.

8. Device as claimed in claim 6 or 7, provided with counter means for counting the predetermined number of cassettes on the discharge conveyor.

9. Device as claimed in claim 8, provided with a pusher member for pushing the predetermined number of cassettes from the discharge conveyor to the feed conveyor.

10. Cassette suitable for a method as claimed in one or more of the claims 1-4 and for a device as claimed in one or more of the claims 5-9, said cassette provided with a slot for inserting a stick or tube therethrough.

11. Device as claimed in one or more of the claims 5-9, provided with a station for positioning the sausages in desired manner relative to the holders.

## Patentansprüche

1. Verfahren zum Transportieren einer oder mehrerer mit einem Aufhängeelement versehener Würste in eine Behandlungskammer, wobei die Würste in einer Kassette in einer vorbestimmten Position platziert werden, und wobei eine vorbestimmte Anzahl von Kassetten mit darin enthaltenen Würsten in einer vorbestimmten Position benachbart zueinander angeordnet werden, so dass eine Stange oder ein Rohr durch die Kassetten hindurchgeführt werden kann, um zu ermöglichen, dass die Würste in die Behandlungskammer transportiert werden und dort benachbart zueinander verbfeiben.

2. Verfahren gemäß Anspruch 1, wobei die Würste über eine Gleitrinne in die Kassette bewegt werden.

3. Verfahren nach Anspruch 2, wobei eine gefüllte Kassette zu einem ersten Förderband transportiert wird, wo die befüllten Kassetten benachbart zueinander bis zu einer vorbestimmten Anzahl angeordnet werden.

4. Verfahren gemäß einem der Ansprüche 1, 2 oder 3, wobei eine vorbestimmte Anzahl von Kassetten zu einem zweiten Förderband transportiert wird, wonach eine Stange oder ein Rohr durch die Kassetten hindurchgeführt wird und das leere Förderband zur Gleitrinne transportiert wird.

5. Vorrichtung zum Transportieren einer oder mehrerer mit einem Aufhängeelement versehener Würste in eine Behandlungskammer, umfassend eine Kassette zur Aufnahme einer Wurst und ein oder mehrere Förderanlagen zum Transportieren gefüllter bzw. geleerter Kassetten von oder zu einem Zulauf der Würste.

6. Vorrichtung gemäß Anspruch 5, umfassend eine Entladeförderanlage zum Entladen der mit Würsten gefüllten Kassetten.

7. Vorrichtung gemäß Anspruch 5 oder 6, umfassend eine Beschickungsförderanlage zum Beschicken der geleerten Kassetten.

8. Vorrichtung gemäß Anspruch 6 oder 7, versehen mit Zähimitteln zum Zählen der vorbestimmten Anzahl von Kassetten auf der Entladeförderanlage.

9. Vorrichtung gemäß Anspruch 8, versehen mit einem Schubelement zum Schieben der vorbestimmten Anzahl von Kassetten von der Entladeförderanlage zur Beschickungsförderanlage.

10. Kassette, geeignet für ein Verfahren gemäß einem oder mehreren der Ansprüche 1 bis 4 und für eine Vorrichtung gemäß einem oder mehreren der Ansprüche 5 bis 9, wobei die Kassette mit einem Schlitz versehen ist, um **dadurch** eine Stange oder ein Rohr einzuschieben.

11. Vorrichtung gemäß einem oder mehreren der Ansprüche 5 bis 9, versehen mit einer Station zur Positionierung der Würste in einer gewünschten Weise relativ zu den Haltem.

## Revendications

1. Procédé permettant de transporter une ou plusieurs saucisses dotées d'un élément de suspension dans une chambre de traitement, dans lequel les saucisses sont placées dans une cassette dans une position prédéterminée, et dans lequel un nombre prédéterminé de cassettes avec les saucisses à l'intérieur sont disposées de manière adjacente les unes par rapport aux autres dans la position prédéterminée, de sorte qu'un bâton ou tube peut être inséré à travers les cassettes afin de permettre aux saucisses d'être transportées dans la chambre de traitement et de rester à cet endroit de manière adjacente les unes par rapport aux autres.

2. Procédé selon la revendication 1, dans lequel les saucisses sont déplacées dans une cassette via une goulotte de descente.

3. Procédé selon la revendication 2, dans lequel une cassette remplie est transportée vers une première courroie transporteuse où les cassettes remplies sont disposées de manière adjacente les unes par rapport aux autres jusqu'au nombre prédéterminé.

4. Procédé selon la revendication 1, 2 ou 3, dans lequel le nombre prédéterminé de cassettes est transporté vers une seconde courroie transporteuse, après quoi le bâton ou tube est placé à travers les cassettes et la courroie transporteuse vide est transportée vers la goulotte de descente.

5. Dispositif pour transporter une ou plusieurs saucisses dotées d'un élément de suspension, dans une chambre de traitement, comprenant une cassette pour recevoir une saucisse, et un ou plusieurs convoyeurs pour transporter les cassettes vides respectivement remplies à partir de et vers une alimentation de saucisses.

6. Dispositif selon la revendication 5, comprenant un convoyeur de décharge pour décharger les cassettes remplies avec les saucisses.

7. Dispositif selon la revendication 5 ou 6, comprenant un convoyeur d'alimentation pour alimenter des cassettes vides.

8. Dispositif selon la revendication 6 ou 7, prévu avec des moyens formant compteur pour compter le nombre prédéterminé de cassettes sur le convoyeur de décharge.

9. Dispositif selon la revendication 8, prévu avec un élément de poussoir pour pousser le nombre prédéterminé de cassettes du convoyeur de décharge au convoyeur d'alimentation.

10. Cassette appropriée pour un procédé selon une ou plusieurs des revendications 1 à 4 et pour un dispositif selon une ou plusieurs des revendications 5 à 9, ladite cassette étant prévue avec une fente pour insérer un bâton ou tube à travers celle-ci.

11. Dispositif selon une ou plusieurs des revendications 5 à 9, prévu avec une station pour positionner les saucisses de la manière souhaitée par rapport aux cassettes.
